# EUROPEAN PATENT APPLICATION

(11) **EP 4 180 319 A1**
(43) Date of publication of application: **17.05.2023**
(21) Application number: 21838260.4
(22) Date of filing: 12.03.2021
(51) Int. Cl.: B63G 8/34, B63B 1/36, B63B 1/38

(54) **METHOD FOR OPERATING FRICTION RESISTANCE REDUCED SHIP**

(30) Priority: 07.07.2020 JP 2020116854
(71) Applicant: Gills Waip Pty Limited, Wooloweyah NSW 2464 (AU)
(72) Inventor: TAKAHASHI Yoshiaki, Tokyo 154-0015 (JP)
(74) Representative: HGF
(86) International application number: PCT/JP2021/010107
(87) International publication number: WO 2022/009477

(57) **Abstract**

[Problem] To provide a method for further reducing the friction resistance of a friction resistance reduced ship. [Solution] Rolling and pitching vary greatly depending on variations in climate, etc.; however, when limited to an extremely short time, the rolling and pitching repeat in an almost identical or similar pattern. Therefore, if the pattern of the immediately preceding rolling and pitching is understood, the subsequent pattern can also be predicted. This is similar for vertical position variation patterns of minute bubble generation units calculated from the angle of the rolling and pitching. Furthermore, the vertical position variation also differs depending on the installation position of each minute bubble generation unit, so the present invention measures the vertical position variation for each minute bubble generation unit, while also predicting the vertical position variation at and after the current time. The predicted vertical position variation is compared with the waterline height, while the time at which the minute bubble generation units below the sea surface will be above the sea surface or the time at which the minute bubble generation units above the sea surface will be below the sea surface are predicted, and an ON/OFF valve 8 is switched at that time.

## Description

### Technical Field

The present invention relates to a method for operating a friction resistance reduced ship, which reduces the friction resistance between the body of a ship and water by supplying minute bubbles (micro bubbles) to the outer surface of the body of the ship.

### Background Art

The present inventor proposes Patent Documents 1 to 4 as a friction resistance reduced ship using minute bubbles. The friction resistance reduced ships disclosed in these Patent Documents 1 to 4 have a common system, whereby an opening is formed on the body of the ship, after which, a minute bubble generation unit is installed in this opening to supply air to the minute bubble generation unit via a pipe.

Particularly, according to the structure of the minute bubble generation unit, a plate to be fastened and a window part to extract air from the pipe to this plate are formed in the opening, and further, a wing for generating negative pressure to extract air is installed in the location opposite the window part.

According to the abovementioned structure, along with the navigation of a ship, negative pressure is generated in the wing, air is extracted from the window part to an air-liquid mixing part via this negative pressure, and minute bubbles are generated due to a Kelvin Helmholtz unstable phenomenon in this air-liquid mixing part, allowing the friction resistance with water during navigation to be reduced by covering the body of the ship with seawater mixed with these minute bubbles.

According to the methods disclosed in the abovementioned Patent Documents 1 to 4, the distribution of the air bubbles injected into a turbulent boundary layer on the side of the body of the ship varies during the process of advection, with a specific density structure formed on the downstream side, varying the local void fraction in the turbulent boundary layer in a temporal space.

Non Patent Document 1 reports that an experiment employing a horizontal channel confirms that the temporal space variation of this void fraction facilitates a reduction in the friction resistance, while the reduction volume of the friction resistance is increased with the same average void fraction by intermittently injecting air bubbles into horizontal channel turbulence.

Additionally, a method for operating a friction resistance reduced ship described in Patent Document 5 describes that air is intermittently supplied to an air bubble generation member in order to improve the effect of reducing friction resistance.

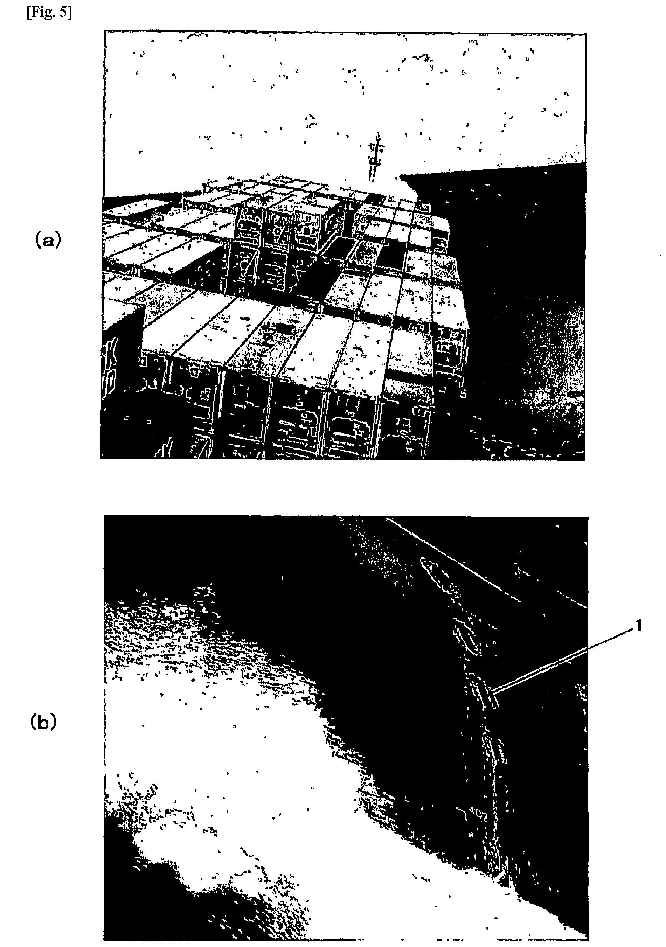

Here, Fig. 5 shows a photograph indicating real navigation of a container ship installed with a minute bubble generation unit, wherein the heave of the ocean is large on the ocean line. In stormy weather, as shown in Fig. 5 (a), the body of the ship inclines approximately 30° due to rolling. Additionally, as shown in Fig.5 (b), a minute bubble generation unit on the left side (or the right side) at the front of the body of the ship is exposed from the sea surface via the composite motion of rolling and pitching.

In other words, even if air is ejected from the minute bubble generation unit exposed from the sea surface, a boundary layer contributing to a reduction in friction is not formed, leading to the consumption of waste energy. The abovementioned prior arts cannot improve this disadvantage.

Patent Document 6 discloses a method for operating an air circulation type ship for navigating a ship while forming a boundary layer in which air and liquid are mixed between the surface of the body of a ship and seawater by air bubbles from an air supply port installed on the body of the ship. It specifically discloses that the angle of rolling and pitching of the body of the ship is detected, after which a determination is made regarding whether the air supply port is located below the water surface from this detection value, and the supply of air to the air supply port determined not to be located below the water surface is blocked.

### Citation List

### Patent Literature

Patent Document 1: JP 4183048 B
Patent Document 2: JP 4212640 B
Patent Document 3: JP 4286313 B
Patent Document 4: JP 5931268 B
Patent Document 5: JP 2011-163774 A
Patent Document 6: Domestic Re-publication of PCT patent Application 2015/198613

### Non Patent Document

Non Patent Document 1: "Improvement in the reduction rate of friction resistance of high-speed channel turbulence by void wave generation" Collected articles of the 24th power and energy technology symposium lectures, 20 June, 2019

### Summary of Invention

### Technical Problem

According to Patent Document 6, a problem not solved in Patent Documents 1 to 5 can be improved. However, according to actual navigation, the body of a ship always moves from front to back, from side to side, and vertically by rolling and pitching. Furthermore, the variation range differs depending on the installation position of an air bubble generation unit on the body of the ship. Further, even if an air bubble generation unit ( air supply port) is determined to be located above the water surface and the air supply is blocked, as the body of the ship is always moving, it is conceivable that the body of the ship is below the sea surface at the point at which air supply is blocked.

### Solution to Problem

When the ship undergoes a disturbance caused by ocean waves, etc. during navigation, a rolling and pitching phenomenon is generated. Disturbances acting on ships include cyclic disturbances caused by ocean waves when the ship is navigating on a relatively calm sea surface and acyclic disturbances in stormy weather. With cyclic disturbances, a rolling and pitching phenomenon having an almost identical pattern is repeated. Moreover, with acyclic disturbances, the almost identical pattern is not repeated; however, when the pattern at an arbitrary point is compared with the patterns before and after the point, they are similar patterns despite having changed more than the pattern in cyclic disturbances.
In other words, it can be said that the continuous patterns of the rolling and pitching phenomenon do not rapidly change at a certain point depending on the navigation conditions.

The present invention has been created based on the abovementioned knowledge. In other words, according to the method for operating a friction resistance reduced ship of the present invention, the next rolling and pitching pattern is predicted from the immediately preceding rolling and pitching pattern during navigation, a predicted vertical position pattern of each minute bubble generation unit is created from this predicted rolling and pitching pattern, and a minute bubble generation unit, which will be above the sea surface at the next rolling and pitching among the plurality of minute bubble generation units, is predicted from this predicted vertical position pattern and the waterline height based on the load capacity, thus closing the valve for suppling air to the present minute bubble generation unit according to the predicted time at which the present minute bubble generation unit will be above the sea surface.

Since there is a time lag in the movement of air from the valve to the minute bubble generation unit, the valve may be operated taking this time lag into consideration.

The present invention is particularly effective for systems involving intermittently (pulsation) discharging air from a minute bubble generation unit. In order to intermittently supply air to the minute bubble generation unit, other than via the controlling of an ON/OFF valve using a diaphragm valve, a butterfly valve, etc., a structure to arrange a diaphragm on a header, etc. may be considered. Advantageous Effects of Invention

According to the present invention, as air is only supplied to the air bubble generation unit located below the water surface by the rolling and pitching movement of the body of the ship due to active control, energy loss is decreased. Particularly, when air is intermittently supplied, the static state of the air bubble ratio (void fraction) on the boundary layer formed between the body of a ship and seawater is delayed by time passage and backward movement along the body of the ship to maintain the turbulence state, thus making it possible to further increase the friction reduction effect.

### Brief Description of Drawings

[Fig. 1] is a side view of a friction resistance reduced ship to which the method of the present invention is applied
[Fig. 2] is a schematic view of an air line
[Fig. 3] is a view showing the state in which the body of a ship is inclined by rolling
[Fig. 4] is a graph showing the relation between a vertical positional change of a minute bubble generation unit by a composite motion with rolling and pitching and a criterial waterline.
[Fig. 5] (a) is a photograph showing a case in which a ship installed with a minute bubble generator is inclined while navigating in the open ocean, while Fig. 5(b) is a photograph showing the bow of the ship while navigating in the open ocean

### Description of Embodiments

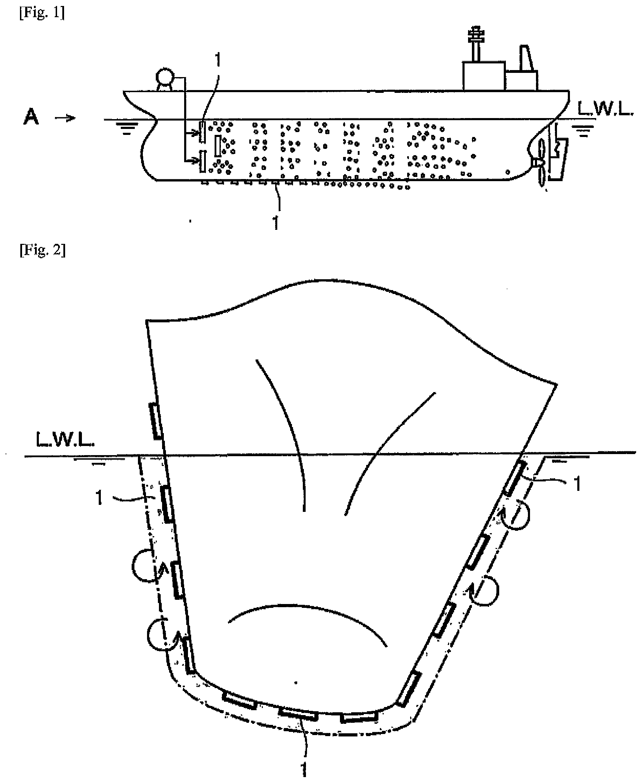

Hereinafter, an Embodiment of the present invention will be described with reference to the attached drawings. As shown in Fig. 1, a plurality of minute bubble generation units 1 to eject minute bubbles are installed on the side and bottom of the friction resistance reduced ship. This minute bubble generation unit 1 is fastened by openings formed on the side and bottom of the body of the ship, with air or compressed air supplied via a pipe installed within the body of the ship.

Fig. 2 shows an example of a supply system to supply air to the minute bubble generation unit 1, wherein air is supplied from an air supply source 2 such as a compressor to headers 4a, 4b, 5, 6a, 6b via a pipe 3. Air is supplied from the headers 4a, 4b to the minute bubble generation unit 1 on the left side of the body of the ship, while the header 4a is connected to the plurality of minute bubble generation units 1 located at an adjacent location of the same height.

Air is supplied from a header 5 to the minute bubble generation unit 1 of the body of the ship bottom, while air is supplied from headers 6a, 6b to the minute bubble generation unit 1 on the left side of the body of the ship. Air may be directly supplied to the minute bubble generation unit 1 by circumventing the header.

A flow rate control valve 7 and an ON/OFF valve 8 are installed on the pipes 3 leading to each header, while the ON/OFF valve 8 is controlled by a controller 9. In the drawing, the ON/OFF valve 8 is installed immediately preceding the header; however, it may be arranged between the header and each minute bubble generation unit 1.

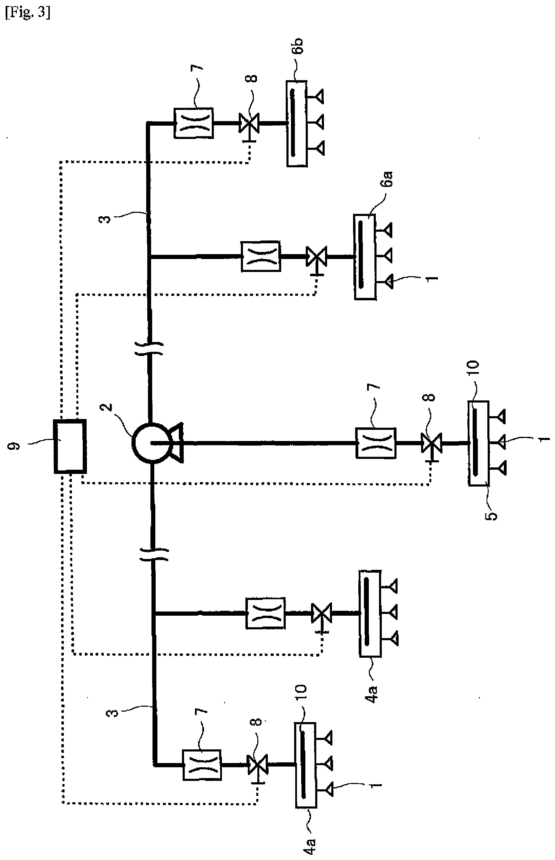

While navigating a ship, the ship is always influenced by waves to repeat rolling and pitching, putting the ship in motion composed of this rolling and pitching. Therefore, as shown in Fig. 3, part of the minute bubble generation unit 1 is above the water surface.

The controller 9 sends a signal to close the ON/OFF valve 8 to the header to which the minute bubble generation unit 1 determined to be located above the seawater surface is connected, while sending a signal to intermittently open and close the ON/OFF valve 8 to the header to which the minute bubble generation unit 1 is determined to be located below the water surface. The signal to intermittently open and close the valve preferably has a frequency of less than several hertz.

Additionally, instead of intermittently turning on and off the ON/OFF valve 8, air to be ejected from the minute bubble generation unit 1 may be allowed to cause pulses by arranging a diaphragm 10, etc. on the header.

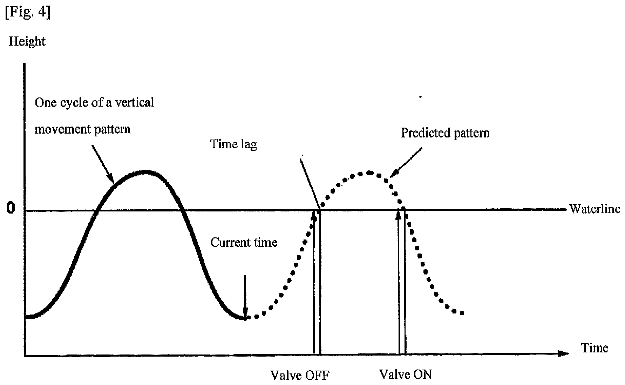

Fig. 4 is a drawing illustrating a method for determining whether a minute bubble generation unit in the controller 9 is located above the seawater surface. This determination is carried out for each minute bubble generation unit 1.

First, the temporal vertical position of each minute bubble generation unit is measured from the rolling and pitching angle. The variation in the measured temporal vertical position is indicated by a curve.

Additionally, in Fig. 4, a horizontal line of height 0 indicates a waterline height based on the load capacity. When the load capacity is little, the waterline height moves downward so as to locate more minute bubble generation units above the seawater surface. On the other hand, when the load capacity is great, the waterline height moves upward so as to locate more minute bubble generation units below the seawater surface.

In Fig. 4, the boundary part between the solid line region and the dotted line region of a variation curve in the vertical position is the current time, wherein the solid line region on the left side from this boundary part indicates the actual passage vertical position, while the dotted line region on the right side indicates the vertical position predicted therefrom.

In other words, rolling and pitching largely change depending on variations in the weather, etc.; however, when limited to an extremely short time, the rolling and pitching repeat in an almost identical or similar pattern. Accordingly, if the pattern of immediately preceding rolling and pitching is known, the next pattern following this can also be predicted. The same applies to the vertical position variation pattern of the minute bubble generation unit calculated from the angle of rolling and pitching.

Moreover, according to the present invention, the vertical position variation is measured for each minute air bubble generation unit, such that the vertical position variation after the current time is predicted as the vertical position variation differs depending on the installation position of each minute bubble generation unit. Subsequently, the predicted vertical position variation is compared with the waterline height, then the time at which the minute bubble generation unit below the sea surface will be above the sea surface or the time at which the minute bubble generation unit above the sea surface will be below the sea surface is predicted, and the ON/OFF valve 8 is switched to that time.

Further, the switching time of the valve 8 is preferably fastened for the time taking into consideration the time required to lead air passed through the valve 8 to the minute bubble generation unit.

As a structure of the minute bubble generation unit, a structure may be considered in which an opening to eject air is installed on the body of the ship and a wing member to generate negative pressure during navigation is arranged on the outside of this opening, allowing air extracted from the opening by negative pressure to generate minute bubbles in the water via a cavitation effect. However, minute bubble generation units are not specifically limited thereto.

### Reference Signs List

1...minute bubble generation unit, 2...air supply source, 3...pipe, 4a, 4b, 5, 6a, 6b...header, 7...flow rate control valve, 8. . .ON/OFF valve, 9... controller.

## Claims

1. A method for operating a friction resistance reduced ship for navigating a ship while forming a boundary layer in which air and liquid are mixed between the surface of the body of the ship and seawater by air bubbles from a plurality of minute bubble generation units installed on the body of the ship,
wherein the next rolling and pitching pattern is predicted from the immediately preceding rolling and pitching pattern during navigation, a predicted vertical position pattern of each minute bubble generation unit is created from this predicted rolling and pitching pattern, and a minute bubble generation unit, which will be above the sea surface at the next rolling and pitching among the plurality of minute bubble generation units, is predicted from this predicted vertical position pattern and the waterline height based on the load capacity, when a valve for suppling air to the present minute bubble generation unit is closed according to the time at which the present minute bubble generation unit is predicted to be above the sea surface, and a valve installed in a passage for supplying air to the minute bubble generation unit predicted to be above the sea surface is closed early for the time during which air moves from the present valve to the minute bubble generation unit.

2. The method for operating a friction resistance reduced ship according to Claim 1 or 2, wherein air is intermittently discharged from the minute bubble generation unit.
